# EUROPÄISCHE PATENTSCHRIFT

(11) **EP 3 078 460 B1**
(45) Veröffentlichungstag und Bekanntmachung des Hinweises auf die Patenterteilung: **22.09.2021**
(21) Anmeldenummer: 16163661.8
(22) Anmeldetag: 04.04.2016
(51) Int. Cl.: B25J 9/16, B25J 19/00

(54) **VERFAHREN ZUM STEUERN VON ZUMINDEST EINEM MANIPULATOR UNTER VERWENDUNG ZUMINDEST EINER KRAFTKOMPENSATIONSVORRICHTUNG**
METHOD FOR CONTROLLING AT LEAST ONE MANIPULATOR USING AT LEAST ONE FORCE COMPENSATION DEVICE
PROCEDE DE COMMANDE D'AU MOINS UN MANIPULATEUR A L'AIDE D'AU MOINS UN DISPOSITIF D'EQUILIBRAGE DES FORCES

(30) Priorität: 07.04.2015 DE 102015206121
(43) Veröffentlichungstag der Anmeldung: 12.10.2016
(73) Patentinhaber: KUKA Systems GmbH, 86165 Augsburg (DE)
(72) Erfinder: WEIDMANN, Rolf, 86153 Augsburg (DE); BOZADA, Zafer, 86899 Landsberg (DE)
(74) Vertreter: Mader, Joachim

(56) Entgegenhaltungen:
- EP-A1- 2 407 281
- EP-A2- 1 930 131
- US-A1- 2011 320 038

## Beschreibung

### 1. Gebiet der Erfindung

Die Erfindung betrifft ein Verfahren zum Steuern von zumindest einem kraftgeregelten Manipulator, unter Verwendung zumindest einer Kraftkompensationsvorrichtung sowie ein Manipulatorsystem, welches zur Durchführung des Verfahrens eingerichtet ist. Derartige Manipulatorsysteme kommen beispielsweise in industriellen Anwendungen zum Einsatz und können bevorzugt direkt mit einem Bediener, ohne der Notwendigkeit von Schutzzäunen oder Ähnlichem, interagieren.

### 2. Hintergrund der Erfindung

Vorzugsweise ist der Manipulator des Manipulatorsystems ein Industrieroboter, welcher automatisch geführt wird und mit drei oder mehr frei programmierbaren Bewegungsachsen ausgerüstet ist. Industrieroboter werden entweder ortsfest oder mobil in industriellen Anwendungen eingesetzt. Sie führen Greifer oder Werkzeuge (Endeffektoren) oder Werkstücke. Als Endeffektor wird das letzte Element einer kinematischen Kette bezeichnet.

Kraftregelung bezeichnet die Regelung der Kraft, mit welcher ein Manipulator auf ein Objekt oder sein Umfeld einwirkt. Durch Regelung der Kontaktkraft können Beschädigungen am Manipulator sowie der zu bearbeitenden Objekte und Verletzungen beim Umgang mit Menschen verhindert werden. Bei Fertigungsaufgaben können Fehler kompensiert und durch eine gleichmäßige Kontaktkraft zwischen dem Manipulator und einem zu bearbeitenden Objekt Verschleiß reduziert werden. Durch die Kraftregelung werden gleichmäßigere Ergebnisse erzielt als mit der ebenfalls in der Steuerung von Maschinen eingesetzten Positionsregelung.

Kraftgeregelte Manipulatoren ermöglichen zudem die Zusammenarbeit von Mensch und Manipulator ohne den Manipulator beispielsweise durch Schutzzäune abgrenzen zu müssen. Somit kommen kraftgeregelte Manipulatoren insbesondere in der Servicerobotik zum Einsatz.

Die Kraftregelung kann als Alternative zur üblichen Positionsregelung, oder ergänzend, in Form von hybriden Regelungskonzepten eingesetzt werden. Die einwirkende Kraft oder das einwirkende Moment wird für die Regelung üblicherweise über entsprechende Kraftsensoren und/oder Momentensensoren gemessen oder über den Motorstrom geschätzt. Um die Kraftregelung zu ermöglichen, kann es notwendig sein, bei der Kraft- und/oder Momentenmessung sowie der Kraft- und/oder Momentenschätzung eine Filterung der Sensorsignale vorzunehmen. Es können zahlreiche Nebeneffekte und Nebenkräfte auftreten, die nicht der Messung der z.B. Kontaktkraft zwischen Manipulator und einem Objekt entsprechen, wie etwa die Schwerkraft oder Trägheitskräfte. Dies gilt insbesondere, wenn eine größere Lastmasse am Manipulator montiert ist. Diese stört die Kraftmessung insbesondere dann, wenn sich der Manipulator mit hohen Beschleunigungen bewegt.

Bekannte kraftgeregelte Manipulatoren sind häufig in ihrer Traglast begrenzt. Ferner wird die tatsächlich nutzbare Traglast der Manipulatoren weiter herabgesetzt, wenn Werkzeuge, wie beispielsweise Greifer am Manipulator montiert werden. Um die Traglast von Manipulatoren zu erhöhen, sind Konzepte bekannt bei denen ein Manipulator mit einer Kraftkompensationsvorrichtungen gekoppelt wird, wie insbesondere einem Federzug. Der Federzug ist dabei typischerweise so am Manipulator angebracht, dass er eine Kraft auf den Manipulator aufbringt, welche der Schwerkraft entgegenwirkt. Oftmals ist der Federzug so eingestellt, dass er die Gewichtskraft einer zu bewegenden Masse, wie beispielsweise eines Werkstücks vollständig kompensiert. In diesen Fällen wirkt der Federzug als Balancer.

Aus der EP 1930 131 A2 ist ein Verfahren zur Steuerung eines Manipulators vorbekannt, bei dem der Einfluss der Schwerkraft sowie von Zentrifugal- und Trägheitskräften bei der Bewegung des Manipulators berücksichtigt werden, um die Andruckkraft eines Werkzeugs des Manipulators an ein Werkstück mit höherer Genauigkeit zu steuern. Aus der EP 2 407 281 A1 ist ein Manipulator mit 10 einer Kraftkompensationsvorrichtung vorbekannt, wobei die Kraftkompensationsvorrichtung in Form eines Balancers ausgebildet ist, um die Traglast des Manipulators zu erhöhen.

Ist der Federzug beispielsweise ortsfest angebracht, ändert sich die Richtung der auf den Manipulator aufgebrachten Kraft in Abhängigkeit der Pose des Manipulators. Insbesondere führt die in der Richtung veränderliche, aufgebrachte Kraft dazu, dass keine gleichmäßige Gewichtsentlastung des Manipulators erreicht wird. Weiterhin weisen Federzüge und/oder Balancer typischerweise über die vollständige Länge des Seilauszugs keine lineare Kraftkennlinie auf. Somit ändert sich der Betrag der auf den Manipulator aufgebrachten Kraft in Abhängigkeit der Pose des Manipulators, bzw. der Länge des ausgezogenen Seiles. Eine kraftgeregelte Steuerung vorbekannter Manipulatorsysteme ist in diesen Fällen nicht möglich, da die Kraftsensoren und/oder Momentensensoren des Manipulators eine von dem Federzug auf das System aufgebrachte Kraft (Moment) nicht von einer anderweitig aufgebrachten Kraft (Moment) unterscheiden können. Insbesondere ist die Kraftregelung nicht möglich, da sich die aufgebrachte Kraft in Betrag und Richtung ändern kann.

Typischerweise werden in vorbekannten Manipulatorsystemen auf Basis eines Manipulatormodells erwartete Belastung aufgrund von Eigengewicht, Manipulatorpose, Last, usw. berechnet. Abweichende gemessene Belastungen entsprechen folglich einer extern wirkenden Kraft, welche zur kraftgeregelten Steuerung herangezogen wird. Wird nun ein Federzug an den Manipulator gekoppelt, kann die Manipulatorsteuerung nicht ohne weiteres unterscheiden, ob eine von dem Federzug auf das Manipulatorsystem aufgebrachte Kraft (Moment) vorliegt oder eine andere externe Kraft, insbesondere dann nicht, wenn die vom Federzug aufgebrachte Kraft in Richtung und/oder Betrag veränderlich ist.

Aufgrund der fehlenden Unterscheidung werden Steuerbefehle des Manipulators möglicherweise falsch umgesetzt. Insbesondere kann der Manipulator wegen der Kraftregelung Bewegungen entgegen der eigentlichen Kommandierung ausführen, wodurch in der Umgebung befindliche Objekte und/oder Personen gefährdet werden können.

Aufgabe der vorliegenden Erfindung ist es daher ein Verfahren sowie ein Manipulatorsystem bereitzustellen, welches eine kraftgeregelte Steuerung eines

Manipulators unter Verwendung einer Kraftkompensationsvorrichtung, wie beispielsweise eines Federzugs, ermöglicht. Dies ermöglicht die Erhöhung der Traglasten des Manipulators und dennoch eine gleichzeitige kraftgeregelte Steuerung.

### 3. Ausführliche Beschreibung der Erfindung

Die Aufgabe wird durch ein Verfahren gemäß Anspruch 1 sowie ein Manipulatorsystem nach Anspruch 8 gelöst. Weitere Aspekte der Erfindung sind in den abhängigen Ansprüchen dargelegt. Im Folgenden wird die Erfindung genauer erläutert, wobei Aspekte, die nicht in den Schutzbereich der Ansprüche fallen als Beispiele präsentiert werden, die für das Verständnis der Erfindung hilfreich sind.

Insbesondere wird die Aufgabe gelöst durch ein Verfahren zum Steuern von zumindest einem kraftgeregelten Manipulator, unter Verwendung zumindest einer Kraftkompensationsvorrichtung, umfassend die folgenden Verfahrensschritte:
a) Bestimmen des Betrages der von der Kraftkompensationsvorrichtung auf den Manipulator aufgebrachten Kompensationskraft;
b) Kontinuierliches Bestimmen der Richtung der von der Kraftkompensationsvorrichtung auf den Manipulator aufgebrachten Kompensationskraft;
c) Steuern des kraftgeregelten Manipulators unter Berücksichtigung des Betrags und der Richtung der von der Kraftkompensationsvorrichtung auf den Manipulator aufgebrachten Kompensationskraft, unter Verwendung einer Manipulatorsteuerungsvorrichtung.

Vorzugsweise wird der Betrag der von der Kraftkompensationsvorrichtung auf den Manipulator aufgebrachten Kompensationskraft mittels eines entsprechenden Sensors gemessen. Dies ist vorteilhaft, da so der tatsächlich aufgebrachte Betrag der Kompensationskraft bestimmt werden kann. Ebenso kann es jedoch ausreichend sein, eine Kraftkompensationsvorrichtung bereitzustellen, welche eine Kraft auf den Manipulator aufbringt, deren Betrag im Wesentlichen konstant ist. Dieser Betrag der Kompensationskraft kann sodann durch einmalige Messung oder durch Ablesen einer Anzeige der Kraftkompensationsvorrichtung bestimmt werden. Ein im Wesentlichen konstanter Betrag der Kompensationskraft ist ein Betrag, welcher um maximal ± 10 %, vorzugsweise um maximal ± 5 % und am bevorzugtesten um maximal ± 1 % vom bestimmten Betrag der Kompensationskraft abweicht.

Eine kontinuierliche Bestimmung der Richtung der von der Kraftkompensationsvorrichtung auf den Manipulator aufgebrachten Kompensationskraft ermöglicht zusammen mit dem bestimmten Betrag der Kompensationskraft und dem Kraftangriffspunkt der Kompensationskraft, die Kompensationskraft in der Kraftregelung zu berücksichtigen. Typischerweise wird die Kompensationskraft an einem bestimmten Kraftangriffspunkt am oder in der Nähe des Endeffektors des Manipulators auf den Manipulator aufgebracht.

Die Berücksichtigung der Kompensationskraft bei der Steuerung des kraftgeregelten Manipulators ist möglich, da die von der Kraftkompensationsvorrichtung auf den Manipulator aufgebrachte Kompensationskraft in Betrag und Richtung nach dem Bestimmen gemäß den Verfahrensschritten a) und b) bekannt ist und der Manipulatorsteuerung zur Verfügung gestellt werden kann. Somit ist es der Steuerung möglich, die von der Kraftkompensationsvorrichtung auf den Manipulator wirkenden Kräfte von anderen auf den Manipulator wirkenden Kräften zu unterscheiden.

Beispielsweise kann die Manipulatorsteuerung die Kräfte der Kraftkompensationsvorrichtung bei der kraftgeregelten Steuerung des Manipulators herausrechnen. Andere auf den Manipulator wirkenden Kräfte können beispielsweise Kontaktkräfte sein, die aus einer Berührung des Manipulators durch eine Person oder durch ein Objekt entstehen. Beispielsweise dienen solche Kontaktkräfte als Steuerungsbefehle des Manipulators, und bewirken ein Verfahren des Manipulators in Richtung der wirkenden externen Kraft.

Die kontinuierliche Bestimmung der Richtung ermöglicht eine kraftgeregelte Steuerung des Manipulators über den gesamten Arbeitsraum des Manipulators. Das kontinuierliche Bestimmen der Richtung (Verfahrensschritt b)) erfolgt vorzugsweise in vorher bestimmten Zeitintervallen mittels entsprechender Sensoren, wie beispielsweise Kraft- und/oder Momentensensoren. Ebenso kann die Richtung mit optischen Sensorsystemen, mit Beschleunigungssensoren, oder anderen geeigneten Sensoren bestimmt werden, welche beispielsweise Position und Orientierung der Kraftkompensationsvorrichtung erfassen. Weiterhin kann das kontinuierliche Bestimmen der Richtung modellbasiert erfolgen, und beispielsweise mittels der Pose des Manipulators bestimmt werden. Die Position eines Körpers ist durch Angaben bezüglich aller drei translatorischen Freiheitsgrade bestimmt, wobei die Orientierung eines Körpers durch Angaben bezüglich aller drei rotatorischen Freiheitsgrade bestimmt ist. Unter der Pose sind Position und Orientierung des Körpers zu verstehen. Die Pose eines Manipulators wird durch die Pose des Endeffektors bestimmt.

Wird die Kompensationskraft berücksichtigt, kann der Manipulator kraftgeregelt betrieben werden. Somit können die mit der Kraftregelung verbundenen Vorteile auch unter Verwendung einer Kraftkompensationsvorrichtung genutzt werden. Insbesondere kann die Kontaktkraft zwischen dem Manipulator und einem zu bearbeitenden Objekt geregelt werden, und so Beschädigungen und Verschleiß reduziert oder vermieden werden. Weiterhin kann der Manipulator zur direkten Zusammenarbeit mit einem Menschen genutzt werden, ohne Verletzungen beim Umgang mit Menschen befürchten zu müssen. Ferner kann der Manipulator über aufgebrachte Kontaktkräfte gesteuert werden. Überdies ermöglicht die Kraftkompensationsvorrichtung eine Erhöhung der Traglast des Manipulators, wodurch der Einsatzbereich der Manipulatoren erweitert werden kann.

Vorzugsweise umfasst der Manipulator zumindest eine Bewegungsachse, wobei jeder Bewegungsachse ein Sensor zugeordnet ist, wobei der Sensor Kräfte und/oder Momente bestimmt, welche auf die Bewegungsachse wirken, der der Sensor zugeordnet ist. Bei Manipulatoren dienen diese Bewegungsachsen zur Erzeugung definierter Bewegungen zum Positionieren und Orientieren von Objekten. Sind alle Bewegungsachsen des Manipulators mit Sensoren ausgestattet, um Kräfte und Momente bestimmen zu können, so kann der Einfluss der auf den Manipulator wirkende Kräfte und Momente entlang der kinematischen Kette des Manipulators bestimmt werden. Dies ermöglicht die Berücksichtigung von Kräften und Momenten in der Kraftregelung, welche auf eine beliebige Bewegungsachse des Manipulators wirken. Somit kann der Kraftangriffspunkt der Kompensationskraft am Manipulator weit gehend frei gewählt werden. Ist beispielsweise der Endeffektor aufgrund seiner Größe oder seiner hohen Beweglichkeit ungeeignet um als Kraftangriffspunkt der Kompensationskraft genutzt zu werden, so kann der Kraftangriffspunkt auch an einer vorhergehenden Bewegungsachse des Manipulators angebracht sein.

Vorzugsweise wird eine Kompensationskraft der Kraftkompensationsvorrichtung in Abhängigkeit einer vom Manipulator zu bewegenden Masse eingestellt, wobei die Kompensationskraft vorzugsweise im Bereich von 0 bis 1000 N, besonders bevorzugt im Bereich von 0 bis 500 N, noch bevorzugter im Bereich von 0 bis 300 N und am bevorzugtesten im Bereich von 0 bis 150 N liegt. Beispielsweise kann die Kompensationskraft so eingestellt sein, dass die Gewichtskraft einer zu bewegenden Masse im Wesentlichen kompensiert wird. Der Manipulator muss folglich, bei idealer Kompensation der Gewichtskraft, nur noch die zur Beschleunigung der zu bewegenden Masse erforderlichen Kräfte aufbringen.

Die Einstellung der Kompensationskraft erfolgt typischerweise bei oder vor Inbetriebnahme des Manipulatorsystems und wird während des Betriebs nicht verändert. Somit kann der Einstellungsaufwand gering gehalten werden. Alternativ kann die Einstellung der Kompensationskraft über eine entsprechende Hydraulik, Pneumatik oder sonstige Aktoren, wie beispielsweise Elektromotoren auch während des Betriebes des Manipulatorsystems vorgenommen werden. Im Bereich der kraftgeregelten Manipulatoren, und insbesondere im Bereich der Servicerobotik, werden typischerweise Massen bis zu einem Gewicht von 100 kg bewegt. Wird eine Kompensationskraft bereitgestellt, welche beispielsweise 1000 N beträgt, so kann die Gewichtskraft einer solchen beispielhaften Masse kompensiert werden.

Vorzugsweise ist die Kraftkompensationsvorrichtung ein Federzug und/oder ein Balancer. Federzüge oder Balancer weisen typischerweise eine Seiltrommel auf, auf welcher ein Zugseil aufgewickelt ist. Beim Abrollen des Zugseiles wird eine Kraft, beispielsweise durch eine Feder, auf das Zugseil aufgebracht. Bekannte Federzüge weisen eine einstellbare Federhärte auf, wodurch die Kraft beim Abrollen des Zugseils eingestellt werden kann. Aufgrund ihrer relativ einfachen Konstruktion zeichnen sich Federzüge und Balancer durch ihre Langlebigkeit und Robustheit aus. Weiterhin kann durch die Verwendung geeigneter Federn oder anderer Krafterzeugungsmittel eine im Wesentlichen konstante Kraft auf das Zugseil aufgebracht werden. Vorzugsweise ist die Kraft während des Abrollens des gesamten Zugseils im Wesentlichen konstant.

Das Bestimmen von Betrag und Richtung der auf den Manipulator aufgebrachten Kompensationskraft erfolgt mittels eines mehrdimensionalen Kraftaufnehmers. Die Verwendung eines mehrdimensionalen Kraftaufnehmers ermöglicht die kontinuierliche Bestimmung von Betrag und Richtung der auf den Manipulator aufgebrachten Kompensationskraft. Somit können der Manipulatorsteuerung aktuelle Daten betreffend den Betrag und die Richtung der Kompensationskraft zur Berücksichtigung in der Kraftregelung des Manipulators bereitgestellt werden. Die Kraftregelung ist in diesem Fall auch dann möglich, wenn sich der Betrag der Kompensationskraft in Abhängigkeit der Pose des Manipulators wesentlich ändert.

Weiterhin kann, da Betrag und Richtung kontinuierlich bestimmt werden, die Aufhängung der Kraftkompensationsvorrichtung beweglich gestaltet werden. Beispielsweise kann die Kraftkompensationsvorrichtung so an einer Decke einer Produktionsstätte oder einer entsprechenden Haltevorrichtung angebracht werden, dass die Aufhängung der Kraftkompensationsvorrichtung den Bewegungen des Manipulators folgen kann. Dies ermöglicht eine effektive Kompensation der Gewichtskraft einer zu bewegenden Masse. Folgt die Aufhängung der Kraftkompensationsvorrichtung den Bewegungen des Manipulators in der Art, dass die Kompensationskraft im Wesentlichen vertikal ausgerichtet ist, so steht nahezu der vollständige Betrag der Kompensationskraft zur Kompensation der Gewichtskraft der zu bewegenden Masse zur Verfügung. Vorzugsweise richtet sich die Aufhängung der Kraftkompensationsvorrichtung dazu räumlich über dem Kraftangriffspunkt der Kompensationskraft am Manipulator aus.

Der mehrdimensionale Kraftaufnehmer ist zwischen der Kraftkompensationsvorrichtung und einer Haltevorrichtung angeordnet. Die Haltevorrichtung dient der Aufhängung der Kraftkompensationsvorrichtung. Ist der mehrdimensionale Kraftaufnehmer zwischen der Haltevorrichtung und der Kraftkompensationsvorrichtung angeordnet, so muss dieser nicht vom Manipulator mitbewegt werden. Dies ist vorteilhaft, da so die vom Manipulator zu bewegende Masse reduziert werden kann.

Das Bestimmen des Betrags der auf den Manipulator aufgebrachten Kompensationskraft kann auch mittels eines eindimensionalen Kraftsensors oder eines eindimensionalen Momentensensors erfolgen. Ist die Kraftkompensationsvorrichtung ein Federzug oder ein Balancer, so kann der Betrag der Kompensationskraft beispielsweise durch Messung der Seilkraft bestimmt werden. Ebenso kann der Betrag der Kompensationskraft über einen Momentensensor und einen bekannten Hebelarm gemessen werden. Die Messung des Betrages der Kompensationskraft ist vorteilhaft, da der Betrag der aktuell wirkenden Kompensationskraft der Kraftregelung bereitgestellt werden kann. Eine eindimensionale Messung ist zudem einfach und erfordert einen geringeren Rechenaufwand, verglichen mit einer mehrdimensionalen Messung. Weiterhin sind eindimensionale Kraftsensoren/Momentensensoren kostengünstiger als entsprechende mehrdimensionale Sensoren.

Vorzugsweise erfolgt das kontinuierliche Bestimmen der Richtung der von der Kraftkompensationsvorrichtung auf den Manipulator aufgebrachten Kompensationskraft mittels der Manipulatorsteuerungsvorrichtung und wird aus der Pose des Manipulators berechnet. Ist der Aufhängepunkt der Kraftkompensationsvorrichtung und die Pose des Manipulators bekannt, so kann die Richtung der Kompensationskraft berechnet werden. Dies ist vorteilhaft, da keine Sensoren zur Bestimmung der Richtung der Kompensationskraft benötigt werden, sondern allenfalls Sensoren zur Bestimmung des Betrags der Kompensationskraft. Dadurch kann das Manipulatorsystem einfach und kostengünstig gehalten werden und das Verfahren benötigt keine weiteren Schritte zur Auswertung der Sensoren.

Vorzugsweise wird das kontinuierliche Bestimmen der Richtung der von der Kraftkompensationsvorrichtung auf den Manipulator aufgebrachten Kompensationskraft mit einer Taktrate von zumindest 100 Hz, vorzugsweise von zumindest einer 500 Hz und besonders bevorzugt von zumindest 2000 Hz durchgeführt. Diese Taktraten ermöglichen die Bereitstellung der aktuellen Richtung der Kompensationskraft an die Kraftregelung. Ferner ist die Taktrate hoch genug um die Kraftregelung gemäß dem Nyquist-Shannon-Abtasttheorem mit zumindest 5 Hz auszuführen.

Vorzugsweise ist die Kraftkompensationsvorrichtung ortsfest und unbeweglich fixiert. Beispielsweise kann die Kraftkompensationsvorrichtung an einer Decke einer Produktionsstätte oder einer entsprechenden Haltevorrichtung der Fabrikdecke angebracht sein. Besonders bevorzugt ist die Kraftkompensationsvorrichtung mittig über dem Arbeitsbereich des Manipulators. Dies ermöglicht eine einfache Berechnung der Richtung der Kompensationskraft, da der Aufhängepunkt der Kraftkompensationsvorrichtung unveränderlich ist und während des Verfahrens nicht bestimmt werden muss. Folglich kann die Komplexität des Verfahrens gering gehalten werden.

Insbesondere wird die Aufgabe auch gelöst durch ein Manipulatorsystem zur Erhöhung der Traglast von zumindest einem Manipulator, welches dazu eingerichtet ist das voranstehend beschriebene Verfahren auszuführen, umfassend: zumindest einen Manipulator, welcher dazu eingerichtet kraftgeregelt gesteuert zu werden; zumindest eine Kraftkompensationsvorrichtung, welche dazu eingerichtet ist eine Kompensationskraft auf den Manipulator aufzubringen; und eine Manipulatorsteuerungsvorrichtung, welche zumindest dazu eingerichtet ist Verfahrenschritt c) auszuführen.

Ist die Manipulatorsteuerungsvorrichtung, welche zur Steuerung des Manipulators dient auch dazu eingerichtet Betrag und Richtung der Kompensationskraft zu berücksichtigen, so sind zur Kraftregelung und zur Steuerung des Manipulators keine weiteren Komponenten notwendig. Folglich kann das erfindungsgemäße Verfahren einfach auf bestehenden Manipulatorsystemen ausgeführt werden, ohne eine aufwändige Nachrüstung der Manipulatorsysteme vornehmen zu müssen.

Vorzugsweise wird die Traglast des zumindest einen Manipulators mittels der Kraftkompensationsvorrichtung um zumindest 100 %, vorzugsweise um zumindest 200% und am bevorzugtesten um zumindest 300% erhöht wird. Eine entsprechende Erhöhung der Traglast ermöglicht die Verwendung des Manipulators in weiteren Einsatzgebieten. Insbesondere können auch mit relativ kleinen Manipulatoren relativ große Massen bewegt werden.

### 4. Ausführliche Beschreibung der Figuren

Im Folgenden werden die Figuren ausführlich beschrieben, dabei zeigt
Fig. 1 eine schematische Darstellung eines Manipulatorsystems;
Fig. 2 eine schematische Darstellung einer Kraftkompensationsvorrichtung;
Fig. 3 eine schematische Detailansicht eines Manipulatorflansches eines Manipulators eines Manipulatorsystems; und
Fig. 4 ein schematisches Flussdiagramm eines Verfahrens zur Steuerung eines Manipulatorsystems.

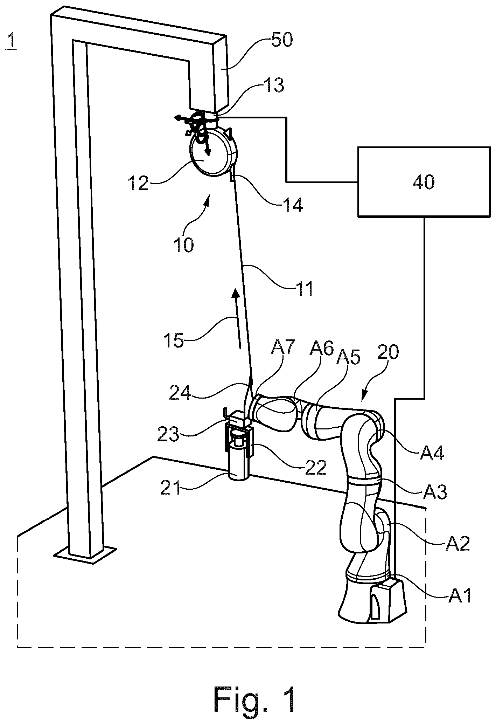

Insbesondere zeigt Fig. 1 ein Manipulatorsystem 1 umfassend eine Kraftkompensationsvorrichtung 10, einen Manipulator 20, eine Manipulatorsteuerungseinrichtung 40 und eine Haltevorrichtung 50. Die Kraftkompensationsvorrichtung 10 ist an der ortsfesten Haltevorrichtung 50 im Aufhängepunkt 13 starr angebracht. Beispielsweise ist die Kraftkompensationsvorrichtung 10 ein Federzug, welcher ein Zugseil 11, eine Seilrolle 12 und einen Seilaustritt 14 umfasst.

Über das Zugseil 11 kann die Kraftkompensationsvorrichtung 10 eine Kompensationskraft 15 auf den Manipulator 20 aufbringen. Dazu ist das Zugseil 11 am Kraftangriffspunkt 24 des Manipulators 20 befestigt. Der Manipulator 20 umfasst beispielsweise sieben Bewegungsachsen A1, A2, A3, A4, A5, A6, A7. Der Endeffektor 23 des Manipulators 20 umfasst einen Greifer 22, welcher eine zu bewegenden Masse 21 hält.

Vorzugsweise ist zwischen der Kraftkompensationsvorrichtung 10 und der Haltevorrichtung 50 zumindest ein Sensor angeordnet, welcher eingerichtet ist, um Betrag und/oder Richtung der Kompensationskraft 15 zu bestimmen. Die Sensordaten werden an die Manipulatorsteuerungsvorrichtung 40 übertragen. Die Datenübertragung kann drahtgebunden oder drahtlos erfolgen. Ebenso ist der Manipulator 20 mit der Manipulatorsteuerungsvorrichtung 40 verbunden. Alternativ kann der Betrag der Kompensationskraft manuell bestimmt werden und der Manipulatorsteuerungsvorrichtung 40 bereitgestellt werden. Da die Kraftkompensationsvorrichtung 10 im Aufhängepunkt 13 mit der ortsfesten Haltevorrichtung 50 starr verbunden ist, ist der Aufhängepunkt 13 unveränderlich und kann der Manipulatorsteuerungsvorrichtung 40 als konstant bereitgestellt werden. Somit kann die Manipulatorsteuerungsvorrichtung 40 aus der Pose des Manipulators 20 die Richtung der Kompensationskraft zu bestimmen.

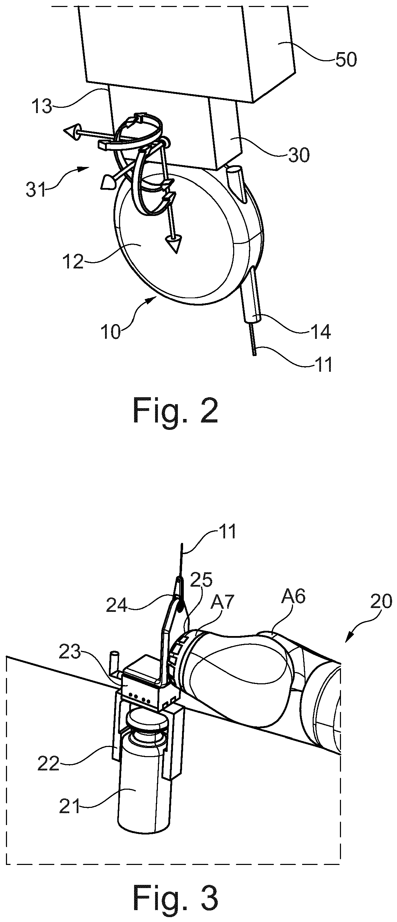

Fig. 2 zeigt einen mehrdimensionalen Kraftaufnehmer 30, welcher zwischen der Kraftkompensationsvorrichtung 10 und der Haltevorrichtung 50 angeordnet ist. Vorzugsweise sind die Kraftkompensationsvorrichtung 10 und die Haltevorrichtung 50 über den mehrdimensionalen Kraftaufnehmer 30 im Aufhängepunkt 12 starr miteinander verbunden. Somit kann der mehrdimensionale Kraftaufnehmer 30 Kräfte und Momente, welche gemäß den Messachsen 31 des mehrdimensionalen Kraftaufnehmers 30 wirken, bestimmen. Aus den Kräften und Momenten, die in den Messachsen 31 bestimmt werden, kann die Richtung und der Betrag der Kompensationskraft 15 bestimmt werden.

Fig. 3 zeigt eine schematische Detailansicht des Manipulatorflansches 25 des Manipulators 20 des Manipulatorsystems 1. Am Manipulatorflansch 25 ist der Endeffektor 23, umfassend den Greifer 22 sowie der Kraftangriffspunkt 24, angebracht. Im Kraftangriffspunkt 24 wird das Zugseil 11 der Kraftkompensationsvorrichtung 10 angebracht. Der Greifer 22 dient zum Greifen der zu bewegenden Masse 21. Das Anbringen des Zugseils 11 am Kraftangriffspunkt 24 des Endeffekttors 23 ist vorteilhaft, da so die gesamte kinematische Kette des Manipulators 20 von der Kraftkompensationsvorrichtung 10 unterstützt werden kann. Somit kann die Traglast des Manipulators 20 effizient erhöht werden.

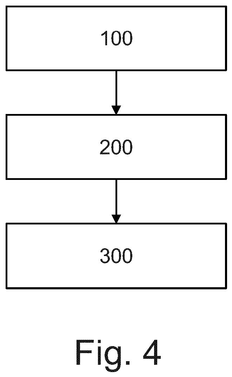

Fig. 4 zeigt ein schematisches Flussdiagramm eines Verfahrens zur Steuerung eines Manipulators 20, wobei im Schritt 100 zunächst der Betrag der von der Kraftkompensationsvorrichtung 10 auf den Manipulator 20 aufgebrachten Kompensationskraft 15 bestimmt wird. Anschließend wird im Schritt 200 die Richtung der von der Kraftkompensationsvorrichtung 10 auf den Manipulator 20 aufgebrachten Kompensationskraft 15 kontinuierlich bestimmt. Danach wird im Schritt 300 der Manipulator 20 mittels der Manipulatorsteuerungsvorrichtung 40 unter Berücksichtigung des Betrags und der Richtung der von der Kraftkompensationsvorrichtung 10 auf den Manipulator 20 aufgebrachten Kompensationskraft 15 kraftgeregelt gesteuert. Zu beachten ist, dass die Verfahrensschritte 100, 200 und 300 zumindest teilweise zeitgleich durchgeführt werden können.

### Bezugszeichen Liste

- 1:: Manipulatorsystem
- 10:: Kraftkompensationsvorrichtung
- 11:: Zugseil
- 12:: Seiltrommel
- 13:: Aufhängungspunkt
- 14:: Seilaustritt
- 15:: Kompensationskraft
- 20:: Manipulator
- A1-A7:: Bewegungsachsen des Manipulators
- 21:: zu bewegenden Masse
- 22:: Greifer
- 23:: Endeffektor
- 24:: Kraftangriffspunkt
- 25:: Manipulatorflansch
- 30:: mehrdimensionalen Kraftaufnehmer
- 31:: Messachsen des Kraftaufnehmers
- 40:: Manipulatorsteuerungsvorrichtung
- 50:: Haltevorrichtung
- 100:: Bestimmen des Betrags der Kompensationskraft
- 200:: Kontinuierliches Bestimmen der Richtung der Kompensationskraft
- 300:: Steuern des Manipulators

## Patentansprüche

1. Verfahren zum Steuern von zumindest einem kraftgeregelten Manipulator (20), unter Verwendung zumindest einer Kraftkompensationsvorrichtung (10) zur Aufbringung einer Kraft auf den Manipulator, **dadurch gekennzeichnet, dass** das Verfahren die die folgenden Verfahrensschritte umfasst:
a) Bestimmen (100) des Betrages der von der Kraftkompensationsvorrichtung (10) auf den Manipulator aufgebrachten Kompensationskraft (15);
b) Kontinuierliches Bestimmen (200) der Richtung der von der Kraftkompensationsvorrichtung (10) auf den Manipulator aufgebrachten Kompensationskraft (15), wobei
das Bestimmen (100, 200) von Betrag und Richtung der auf den Manipulator (20) aufgebrachten Kompensationskraft (15) mittels eines mehrdimensionalen Kraftaufnehmers (30) erfolgt, wobei
der mehrdimensionale Kraftaufnehmer (30), zwischen der Kraftkompensationsvorrichtung (10) und einer ortsfesten Haltevorrichtung (50) angeordnet ist, und
c) Steuern (300) des kraftgeregelten Manipulators (20) unter Berücksichtigung des Betrags und der Richtung der von der Kraftkompensationsvorrichtung (10) auf den Manipulator (20) aufgebrachten Kompensationskraft (15), unter Verwendung einer Manipulatorsteuerungsvorrichtung (40).

2. Verfahren nach Anspruch 1, wobei der Manipulator (20) zumindest eine Bewegungsachse (A1 bis A7) aufweist, und jeder Bewegungsachse (A1 bis A7) ein Sensor zugeordnet ist, wobei der Sensor Kräfte und/oder Momente bestimmt, welche auf die Bewegungsachse (A1 bis A7) wirken, der der Sensor zugeordnet ist.

3. Verfahren nach einem der vorhergehenden Ansprüche, wobei
eine Kompensationskraft (15) der Kraftkompensationsvorrichtung (10) in Abhängigkeit einer, vom Manipulator (20) zu bewegenden Masse (21) eingestellt wird, und die Kompensationskraft (15) vorzugsweise im Bereich von 0 bis 1000 N, besonders bevorzugt im Bereich von 0 bis 500 N, noch bevorzugter im Bereich von 0 bis 300 N und am bevorzugtesten im Bereich von 0 bis 150 N liegt.

4. Verfahren nach einem der vorhergehenden Ansprüche, wobei die Kraftkompensationsvorrichtung (10) ein Federzug und/oder ein Balancer ist.

5. Verfahren nach einem der vorhergehenden Ansprüche wobei das kontinuierliche Bestimmen (200) der Richtung der von der Kraftkompensationsvorrichtung (10) auf den Manipulator (20) aufgebrachten Kompensationskraft (15) mittels der Manipulatorsteuerungsvorrichtung (40) erfolgt und aus der Pose des Manipulators (20) berechnet wird.

6. Verfahren nach einem der vorhergehenden Ansprüche, wobei das kontinuierliches Bestimmen (200) der Richtung der von der Kraftkompensationsvorrichtung (10) auf den Manipulator aufgebrachten Kompensationskraft (15) mit einer Taktrate von zumindest 100 Hz, vorzugsweise von zumindest einer 500 Hz und besonders bevorzugt von zumindest 2000 Hz durchgeführt wird.

7. Verfahren nach einem der vorhergehenden Ansprüche, wobei die Kraftkompensationsvorrichtung (10) ortsfest und unbeweglich fixiert ist.

8. Manipulatorsystem (1) zur Erhöhung der Traglast von zumindest einem Manipulator (20), welches dazu eingerichtet ist ein Verfahren nach einem der vorhergehenden Ansprüche 1 bis 7 auszuführen umfassend:
zumindest einen Manipulator (20), welcher dazu eingerichtet kraftgeregelt gesteuert zu werden;
zumindest eine Kraftkompensationsvorrichtung (10), welche dazu eingerichtet ist eine Kompensationskraft (15) auf den Manipulator (20) aufzubringen;
einen mehrdimensionalen Kraftaufnehmer, der dazu eingerichtet ist Betrag und Richtung der auf den Manipulator (20) aufgebrachten Kompensationskraft (15) zu bestimmen, wobei
der mehrdimensionale Kraftaufnehmer (30), zwischen der Kraftkompensationsvorrichtung (10) und einer ortsfesten Haltevorrichtung (50) angeordnet ist, und
eine Manipulatorsteuerungsvorrichtung (40), welche zumindest dazu eingerichtet ist Verfahrenschritt c) auszuführen.

9. Manipulatorsystem (1) zur Erhöhung der Traglast von zumindest einem Manipulator (20) nach Anspruch 8, wobei die Traglast des zumindest einem Manipulators (20) mittels der Kraftkompensationsvorrichtung (10), um zumindest 100 %, vorzugsweise um zumindest 200% und am bevorzugtesten um zumindest 300% erhöht wird.

## Claims

1. A method for controlling at least one force regulated manipulator (20), using at least one force compensation device (10) to apply a force to the manipulator, **characterized in that** the method comprises the method steps of:
a) determining (100) the magnitude of the compensation force (15) applied to the manipulator by the force compensation device (10);
b) continuously determining (200) of the direction of the compensation force (15) applied to the manipulator by the force compensation device (10), wherein
the determining (100, 200) of the magnitude and direction of the compensation force (15) applied to the manipulator (20) is performed by means of a multidimensional force transducer (30), wherein
the multidimensional force transducer (30) is arranged between the force compensation device (10) and a stationary holding device (50), and
c) controlling (300) the force regulated manipulator (20) with consideration of the magnitude and the direction of the compensation force (15) applied to the manipulator (20) by the force compensation device (10), using a manipulator control device (40).

2. The method according to claim 1, wherein the manipulator (20) has at least one movement axis (Ai to A7), and each movement axis (A1 to A7) is associated with a sensor, wherein the sensor determines forces and/or torques acting on the movement axis (A1 to A7) with which the sensor is associated.

3. The method according to any one of the preceding claims, wherein
a compensation force (15) of the force compensation device (10) is set in dependence of a mass (21) to be moved by the manipulator (20), and the compensation force (15) preferably lies in the range from 0 to 1000 N, particularly preferably in the range from 0 to 500 N, even more preferably in the range from 0 to 300 N and most preferably in the range from 0 to 150 N.

4. The method according to any one of the preceding claims, wherein the force compensation device (10) is a spring balancer and/or a balancer.

5. The method according to any one of the preceding claims, wherein the continuously determining (200) of the direction of the compensation force (15) applied by the force compensation device (10) to the manipulator (20) is performed by means of the manipulator control device (40) and calculated from the pose of the manipulator (20).

6. The method according to any one of the preceding claims, wherein the continuously determining (200) of the direction of the compensation force (15) applied to the manipulator by the force compensation device (10) is performed at a clock frequency of at least 100 Hz, preferably of at least 500 Hz, and more preferably of at least 2000 Hz.

7. The method according to any one of the preceding claims, wherein the force compensation device (10) is stationary and immovably fixed.

8. A manipulator system (1) for increasing the payload of at least one manipulator (20), which is adapted to perform a method according to any of the preceding claims 1 to 7 comprising:
at least one manipulator (20) adapted to be force regulated controlled;
at least one force compensation device (10) adapted to apply a compensation force (15) to the manipulator (20);
a multidimensional force transducer adapted to determine magnitude and direction of the compensation force (15) applied to the manipulator (20), wherein
the multidimensional force transducer (30) being disposed between the force compensation device (10) and a stationary holding device (50), and
a manipulator control device (40) which is at least adapted to perform method step c).

9. The manipulator system (1) for increasing the payload of at least one manipulator (20) according to claim 8, wherein the payload of the at least one manipulator (20) is increased by means of the force compensation device (10), by at least 100%, preferably by at least 200% and most preferably by at least 300%.

## Revendications

1. Procédé pour commander au moins un manipulateur à force régulée (20) en utilisant au moins un dispositif de compensation de force (10) pour appliquer une force au manipulateur, **caractérisé en ce que** le procédé inclut les étapes de procédé suivantes :
a) détermination (100) de la valeur de la force de compensation (15) appliquée au manipulateur par le dispositif de compensation de force (10) ;
b) détermination continue (200) de la direction de la force de compensation (15) appliquée au manipulateur par le dispositif de compensation de force (10),
la détermination (100, 200) de la valeur et de la direction de la force de compensation (15) appliquée au manipulateur (20) s'effectuant au moyen d'un capteur de force multidimensionnel (30),
le capteur de force multidimensionnel (30) étant disposé entre le dispositif de compensation de force (10) et un dispositif de retenue fixe (50), et
c) commande (300) du manipulateur à force régulée (20) en tenant compte de la valeur et de la direction de la force de compensation (15) appliquée par le dispositif de compensation de force (10) au manipulateur (20), en utilisant un dispositif de commande de manipulateur (40) .

2. Procédé selon la revendication 1, dans lequel le manipulateur (20) comporte au moins un axe de déplacement (A1 à A7), et à chaque axe de déplacement (A1 à A7) est associé un capteur, dans lequel le capteur détermine des forces et/ou des moments qui agissent sur l'axe de déplacement (A1 à A7) auquel le capteur est associé.

3. Procédé selon une des revendications précédentes, dans lequel une force de compensation (15) du dispositif de compensation de force (10) est réglée en fonction d'une masse (21) à déplacer par la manipulateur (20), et la force de compensation (15) se situe de préférence dans la plage de 0 à 1 000 N, particulièrement préférentiellement dans la plage de 0 à 500 N, encore plus préférentiellement dans la plage de 0 à 300 N et le plus préférentiellement dans la plage de 0 à 150 N.

4. Procédé selon une des revendications précédentes, dans lequel le dispositif de compensation de force (10) est un moyen de traction à ressort et/ou un équilibreur.

5. Procédé selon une des revendications précédentes, dans lequel la détermination continue (200) de la direction de la force de compensation (15) appliquée au manipulateur (20) par le dispositif de compensation de force (10) s'effectue au moyen du dispositif de commande de manipulateur (40) et est calculée à partir de la pose du manipulateur (20).

6. Procédé selon une des revendications précédentes, dans lequel la détermination continue (200) de la direction de la force de compensation (15) appliquée au manipulateur par le dispositif de compensation de force (10) est réalisée avec une fréquence d'au moins 100 Hz, de préférence d'au moins 500 Hz et particulièrement préférentiellement d'au moins 2 000 Hz.

7. Procédé selon une des revendications précédentes, dans lequel le dispositif de compensation de force (10) est immobilisé de manière fixe et immobile.

8. Système de manipulateur (1) pour augmenter la capacité de charge d'au moins un manipulateur (20), qui est agencé pour exécuter un procédé selon une des revendications précédentes 1 à 7, incluant :
au moins un manipulateur (20), qui est agencé pour être commandé avec une force régulée ;
au moins un dispositif de compensation de force (10) qui est agencé pour appliquer au manipulateur (20) une force de compensation (15) ;
un capteur de force multidimensionnel, qui est agencé pour déterminer la valeur et la direction de la force de compensation (15) appliquée au manipulateur (20), dans lequel le capteur de force multidimensionnel (30) est disposé entre le dispositif de compensation de force (10) et un dispositif de retenue fixe (50), et
un dispositif de commande de manipulateur (40), qui est agencé au moins pour exécuter l'étape de procédé c).

9. Système de manipulateur (1) pour augmenter la capacité de charge d'au moins un manipulateur (20) selon la revendication 8, dans lequel la capacité de charge de l'au moins un manipulateur (20) est augmentée au moyen du dispositif de compensation de force (10) d'au moins 100 %, de préférence d'au moins 200 % et le plus préférentiellement d'au moins 300 %.
